Europäisches Patentamt

European Patent Office

Office européen des brevets

(11) Veröffentlichungsnummer: **0 563 070 B1**

# EUROPÄISCHE PATENTSCHRIFT

(45) Veröffentlichungstag der Patentschrift: **11.10.95**

(51) Int. Cl.[6]: **C10L 1/02**

(21) Anmeldenummer: **91920723.3**

(22) Anmeldetag: **04.12.91**

(86) Internationale Anmeldenummer:
**PCT/EP91/02312**

(87) Internationale Veröffentlichungsnummer:
**WO 92/11345 (09.07.92 92/17)**

(54) **MISCHUNGEN VON FETTSÄURENIEDRIGALKYLESTERN MIT VERBESSERTER KÄLTESTABILITÄT.**

(30) Priorität: **17.12.90 DE 4040317**

(43) Veröffentlichungstag der Anmeldung:
**06.10.93 Patentblatt 93/40**

(45) Bekanntmachung des Hinweises auf die
Patenterteilung:
**11.10.95 Patentblatt 95/41**

(84) Benannte Vertragsstaaten:
**AT BE CH DE FR GB IT LI NL**

(56) Entgegenhaltungen:
**FR-A- 2 492 402**
**GB-A- 2 099 449**

(73) Patentinhaber: **Henkel Kommanditgesellschaft auf Aktien**

**D-40191 Düsseldorf (DE)**

(72) Erfinder: **DEMMERING, Günther**
**Von Galenstra e 40**
**D-5650 Solingen (DE)**
Erfinder: **SCHMID, Karl**
**Stifterstra e 10**
**D-4020 Mettmann (DE)**
Erfinder: **BONGARDT, Frank**
**Leichlingerstra e 12**
**D-4000 Düsseldorf 13 (DE)**
Erfinder: **WITTICH, Leonhard**
**Wilhelm-Leuschner-Stra e 24**
**D-4018 Langenfeld (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Mischungen von Fettsäureniedrigalkylestern mit verbesserter Kältestabilität, ein Verfahren zu ihrer Herstellung sowie ihre Verwendung als Kraftstoff für Dieselmotoren.

Als Kraftstoffe für Dieselmotoren werden üblicherweise schwer entflammbare Gemische verwendet, die überwiegend aus Paraffinen mit Beimengungen von Olefinen, Naphthenen und aromatischen Kohlenwasserstoffen bestehen. Ihre Zusammensetzung ist uneinheitlich und hängt weitgehend vom Herstellungsverfahren ab. Kraftstoffe dieser Art werden auf Basis von Erdöl und Erdgas gewonnen; ihre Verwendung trägt also zum Verbrauch von fossilen, nicht erneuerbaren Rohstoffen bei. Seit einigen Jahren wird daher der Einsatz von Dieselkraftstoffen auf Basis von Fetten und Ölen, also nachwachsenden Rohstoffen diskutiert [**RAPS, 6, Sonderausgabe, 145 (1988)**]. Als besonders geeignet haben sich für diesen Einsatzzweck technische Fettsäuremethylestergemische ("Biodiesel") erwiesen. Da diese Mischungen jedoch bei Temperaturen unterhalb von -5°C keine ausreichende Filtrierbarkeit mehr besitzen und in den Förderleitungen erstarren, kommen sie als Dieselkraftstoff unter Winterbedingungen nicht in Betracht.

Die Aufgabe der Erfindung bestand somit darin, einen Dieselkraftstoff aus Basis von Fettsäureestern zu entwickeln, der über eine verbesserte Kältestabilität verfügt.

Gegenstand der Erfindung sind Mischungen von Fettsäureniedrigalkylestern mit verbesserter Kältestabilität enthaltend

a) 58 bis 95 Gew.-% mindestens eines Esters im Iodzahlbereich 50 bis 150, der sich von Fettsäuren mit 12 bis 22 Kohlenstoffatomen und niederen aliphatischen Alkoholen mit 1 bis 4 Kohlenstoffatomen ableitet,

b) 4 bis 40 Gew.-% mindestens eines Esters von Fettsäuren mit 6 bis 14 Kohlenstoffatomen und niederen aliphatischen Alkoholen mit 1 bis 4 Kohlenstoffatomen und

c) 0,1 bis 2 Gew.-% mindestens eines polymeren Esters.

Überraschenderweise wurde gefunden, daß man die Kältestabilität von Biodiesel durch den Zusatz von kurzkettigen Fettsäuremethylestern und ausgewählten Stockpunkterniedrigern vom Typ polymerer Ester soweit verbessern kann, daß die Gemische auch bei Temperaturen von -19°C noch pumpfähig sind und somit problemlos auch unter harten winterlichen Bedingungen als Kraftstoff in Dieselmotoren eingesetzt werden können. Die Erfindung schließt die Erkenntnis ein, daß die Auswahl der Stockpunkterniedriger der Komponente c) nicht beliebig ist. Vielmehr sind nur ganz bestimmte Typen zusammen mit den Fettsäureniedrigalkylestern der Komponente b) in der Lage, die Kältestabilität von Fettsäureniedrigalkylestern der Komponente a) in befriedigender Weise zu verbessern.

Als Fettsäureniedrigalkylester, die die **Komponente a)** darstellen, kommen technische Gemische der Ethyl-, Propyl-, Butyl- und insbesondere Methylester von Fettsäuren mit 12 bis 22 Kohlenstoffatomen, also beispielsweise der Laurinsäure, Myristinsäure, Palmitinsäure, Palmitoleinsäure, Stearinsäure, Ölsäure, Elaidinsäure, Petroselinsäure, Ricinolsäure, Elaeostearinsäure, Linolsäure, Linolensäure, Arachinsäure, Gadoleinsäure, Behensäure oder Erucasäure in Betracht, die eine Iodzahl von 50 bis 150, insbesondere 90 bis 125 aufweisen. Mischungen mit besonders vorteilhaften Eigenschaften werden erhalten, wenn die Komponente a) technische Gemische darstellt, die überwiegend, d. h. zu mindestens 50 Gew.-% - bezogen auf die Komponente a), Methylester von Fettsäuren mit 16 bis 22 Kohlenstoffatomen und 1, 2 oder 3 Doppelbindungen enthalten. Die bevorzugten Fettsäureniedrigalkylester sind dabei Ölsäure-, Linolsäure-, Linolensäure- und Erucasäuremethylester.

Technische Mischungen der genannten Art werden beispielsweise durch Spaltung und Veresterung von natürlichen Fetten und Ölen oder durch deren Umesterung mit niederen aliphatischen Alkoholen gewonnen. Zur Herstellung von Fettsäureniedrigalkylestern der Komponente a) geht man vorteilhafterweise von Fetten und Ölen hoher Iodzahl aus, wie beispielsweise Sonnenblumenöl, Rüböl, Korianderöl, Ricinusöl, Sojaöl, Baumwollsaatöl, Erdnußöl oder Rindertalg. Bevorzugt sind Fettsäureniedrigalkylester auf Basis von Rüböl neuer Züchtung, dessen Fettsäurekomponente sich zu mehr als 80 Gew.-% von ungesättigten Fettsäuren mit 18 Kohlenstoffatomen ableitet.

Bei den Fettsäureniedrigalkylestern, die die **Komponente b)** bilden, handelt es sich um Ethyl-, Propyl-, Butyl- oder insbesondere Metylester von Fettsäuren mit 6 bis 14 Kohlenstoffatomen, also beispielsweise der Capronsäure, Caprylsäure, Caprinsäure, Laurinsäure oder Myristinsäure oder deren technischen Gemische. Fettsäureniedrigalkylester aus dieser Gruppe, die in besonderem Maße die Kältestabilität der Komponente a) verbessern, stellen Methylester von gesättigten Fettsäuren mit 8 bis 10 Kohlenstoffatomen dar.

Zur Herstellung der Fettsäureniedrigalkylester der Komponente b) geht man in der Regel von Fetten und Ölen mit Iodzahl kleiner 50 aus, die zunächst einer Druckspaltung unterworfen werden. Das Gemisch der dabei anfallenden Fettsäuren wird fraktioniert und der Anteil kurzkettiger Fettsäuren mit 6 bis 12 Kohlenstoffatomen, die sogenannten "Vorlauffettsäuren", zunächst abgetrennt und anschließend verestert. Ein bevorzugtes Ausgangsmaterial zur Herstellung von Estern der Komponente b) ist Kokosöl.

Als polymere Ester, die die **Komponente c)** bilden, kommen Mischungen von polymeren Estern oder Copolymere von Estern der Acryl- und/oder Methacrylsäure mit Alkoholen mit 1 bis 22 Kohlenstoffatomen im Alkoholrest in Betracht. Bei diesen Substanzen handelt es sich um bekannte Stockpunkterniedriger, deren Herstellungsprinzip beispielsweise der deutschen Patentanmeldung **DE-A-38 07 395** zu entnehmen ist.

Die polymeren Ester der Komponente c) können sich von aliphatischen primären Alkoholen ableiten. Typische Beispiele sind Methanol, Ethanol, n-Propylalkohol, i-Propylalkohol, n-Butanol, i-Butanol, tert.-Butanol, Pentanol, Hexanol, Caprylalkohol, Caprinalkohol, Undecylalkohol, Laurylalkohol, Myristylalkohol, Cetylalkohol, Palmitoleylalkohol, Stearylalkohol, Oleylalkohol, Behenylalkohol oder Erucylalkohol. Die polymeren Ester können auch Alkoholreste enthalten, die sich von technischen Gemischen ableiten, wie sie beispielsweise durch Hochdruckhydrierung von technischen Fettsäuremethylesterfraktionen oder Reduktion von Aldehyden aus der Roelen'schen Oxosynthese erhalten werden.

Polymere Ester der Komponente c), die die Kältestabilität der Komponente a) in besonderem Maße verbessern, enthalten Mischungen von polymeren Estern oder Copolymeren-Mischungen von Estern der Methacrylsäure mit Alkoholen mit 4 bis 14 Kohlenstoffatomen und Estern der Methacrylsäure mit Methanol im Gewichtsverhältnis 1 : 3 bis 3 : 1, insbesondere 1 : 1. Die Mischungen können daneben Mischungen polymerer Ester oder Copolymeren-Mischungen von Estern der Acrylsäure mit Alkoholen mit 4 bis 14 Kohlenstoffatomen in Mengen kleiner 10 Gew.-% - bezogen auf die Gesamtmischung - enthalten.

Ein weiterer Gegenstand der Erfindung betrifft ein Verfahren zur Herstellung von Mischungen von Fettsäureniedrigalkylestern mit verbesserter Kältestabilität, das sich dadurch auszeichnet, daß man

a) 58 bis 95 Gew.-% mindestens eines Esters im Iodzahlbereich 50 bis 150, der sich von Fettsäuren mit 12 bis 22 Kohlenstoffatomen und niederen aliphatischen Alkoholen mit 1 bis 4 Kohlenstoffatomen ableitet,

b) 4 bis 40 Gew.-% mindestens eines Esters von Fettsäuren mit 6 bis 14 Kohlenstoffatomen und niederen aliphatischen Alkoholen mit 1 bis 4 Kohlenstoffatomen und

c) 0,1 bis 2 Gew.-% mindestens eines polymeren Esters

miteinander vermischt.

Mischungen mit besonders vorteilhafter Kältestabilität werden erhalten, wenn man

- als **Komponente a)** technische Gemische, die überwiegend Methylester von Fettsäuren mit 16 bis 22 Kohlenstoffatomen und 1, 2 oder 3 Doppelbindungen enthalten,
- als **Komponente b)** Methylester von gesättigten Fettsäuren mit 8 bis 10 Kohlenstoffatomen und
- als **Komponente c)** Copolymere von Estern der Acryl- und/oder Methacrylsäure mit Alkoholen mit 1 bis 22 Kohlenstoffatomen im Alkoholrest einsetzt.

Das Vermischen der Komponenten a), b) und c) kann auf rein mechanischem Wege, z. B. durch Verrühren erfolgen; eine chemische Reaktion findet nicht statt. Mischungen mit besonders vorteilhafter Kältestabilität können die Komponente b) in Mengen von 10 bis 30, insbesondere 15 bis 25 Gew.-% und die Komponente c) in Mengen von 1 bis 1,5 Gew.-% enthalten. Alle Prozent-Angaben sind dabei auf die Gesamtmischung bezogen.

Die erfindungsgemäßen Mischungen weisen eine gegenüber dem Stand der Technik verbesserte Kältestabilität auf und sind bis -19°C pumpfähig. Ein weiterer Gegenstand der Erfindung betrifft daher die Verwendung der erfindungsgemäßen Mischungen als Kraftstoff für Dieselmotoren.

Die folgenden Beispiele sollen den Gegenstand der Erfindung näher erläutern, ohne ihn darauf einzuschränken.

## Beispiele

Ausgangsstoffe

1. Rapsfettsäuremethylester (neue Züchtung)

| Zusammensetzung | Myristinsäuremethylester | 0,5 Gew.-% |
| --- | --- | --- |
| | Palmitinsäuremethylester | 4 Gew.-% |
| | Stearinsäuremethylester | 1 Gew.-% |
| | Ölsäuremethylester | 60 Gew.-% |
| | Linolsäuremethylester | 20 Gew.-% |
| | Linolensäuremethylester | 9 Gew.-% |
| | Arachinsäuremethylester | 0,5 Gew.-% |
| | Gadoleinsäuremethylester | 2 Gew.-% |
| | Behensäuremethylester | 1 Gew.-% |
| | Erucasäuremethylester | 2 Gew.-% |
| Iodzahl | 108 | |

2. Vorlauffettsäuremethylester auf Basis von Kokosöl

| Zusammensetzung | Capronsäuremethylester | 1 Gew.-% |
| --- | --- | --- |
| | Caprylsäuremethylester | 53 Gew.-% |
| | Caprinsäuremethylester | 46 Gew.-% |

3. Erfindungsgemäßer Copolymeren-Ester (C)

| Komponenten | Methacrylsäureester auf Basis Methanol | 50 Gew.-% |
| --- | --- | --- |
| | Methacrylsäureester auf Basis $C_{4/14}$-Alkoholgemisch | 49 Gew.-% |
| | Acrylsäureester auf Basis $C_{1/14}$-Alkoholgemisch | 1 Gew.-% |

4. Stockpunktserniedriger zu Vergleichszwecken (D)
Carbacryl[(R)] F 45
Verkaufsprodukt der Fa.BASF
5. Stockpunktserniedriger zu Vergleichszwecken (E)
Lubrizol[(R)] 6660
Verkaufsprodukt der Fa.Lubrizol

Beispiel 1 bis 3, Vergleichsbeispiele V1 bis V5

**Allgemeine Vorschrift zur Bestimmung des Cold filter pluging points (CFFP).** Die Beurteilung der Kältestabilität von Dieselkraftstoffen erfolgt anhand des sogenannten "Cold filter pluging points (CFFP)", der die Temperatur angibt, bei der durchgesaugter Dieselkraftstoff ein Filter blockiert. Hierbei wird ein Probeteil des Brennstoffs unter vorgeschriebenen Bedingungen abgekühlt und in Abständen von 1 ° C mit einem Unterdruck von 20 mbar durch ein genormtes Drahtnetzfilter in eine Pipette gesaugt. Die Prüfung wird solange fortgesetzt, bis die Menge der ausgeschiedenen Feststoffkristalle ausreicht, den Durchfluß zu unterbrechen oder so zu verlangsamen, daß die Zeitspanne zur Füllung der Pipette 60 s übersteigt oder der Brennstoff nicht mehr vollständig in das Probegefäß zurückfließt [**Europa Norm 116**]. Die Ergebnisse der Versuche sind in Tab.1 zusammengefaßt.

4

Tab.1: Cold filter pluging points (CFPP)

| Bsp. | Zusammensetzung | | CFPP<br>°C |
|------|------|------|------|
| 1 | 79 | Gew.-% Rapsfettsäuremethylester | - 20 |
| | 20 | Gew.-% Vorlauffettsäuremethylester | |
| | 1 | Gew.-% Edenor$^{(R)}$ 2661 | |
| 2 | 78 | Gew.-% Rapsfettsäuremethylester | - 21 |
| | 20 | Gew.-% Vorlauffettsäuremethylester | |
| | 1,5 | Gew.-% Edenor$^{(R)}$ 2661 | |

Forts. Tab.1:  Cold filter pluging points (CFPP)

| Bsp. | Zusammensetzung | CFPP °C |
|------|-----------------|---------|
| 3 | 84 Gew.-% Rapsfettsäuremethylester<br>15 Gew.-% Vorlauffettsäuremethylester<br>1 Gew.-% C | - 19 |
| V1 | 100 Gew.-% Rapsfettsäuremethylester | - 5 |
| V2 | 99 Gew.-% Rapsfettsäuremethylester<br>1 Gew.-% C | - 16 |
| V3 | 99 Gew.-% Rapsfettsäuremethylester<br>1 Gew.-% D | - 9 |
| V4 | 79 Gew.-% Rapsfettsäuremethylester<br>20 Gew.-% Vorlauffettsäuremethylester<br>1 Gew.-% D | - 13 |
| V5 | 99 Gew.-% Rapsfettsäuremethylester<br>1 Gew.-% E | - 12 |

**Patentansprüche**

1. Mischungen von Fettsäureniedrigalkylestern mit verbesserter Kältestabilität enthaltend
   a) 58 bis 95 Gew.-% mindestens eines Esters im Iodzahlbereich 50 bis 150, der sich von Fettsäuren mit 12 bis 22 Kohlenstoffatomen und niederen aliphatischen Alkoholen mit 1 bis 4 Kohlenstoffatomen ableitet,
   b) 4 bis 40 Gew.-% mindestens eines Esters von Fettsäuren mit 6 bis 14 Kohlenstoffatomen und niederen aliphatischen Alkoholen mit 1 bis 4 Kohlenstoffatomen und
   c) 0,1 bis 2 Gew.-% mindestens eines polymeren Esters.

2. Mischung nach Anspruch 1, **dadurch gekennzeichnet**, daß die Komponente a) technische Gemische darstellt, die überwiegend Methylester von Fettsäuren mit 16 bis 22 Kohlenstoffatomen und 1, 2 oder 3 Doppelbindungen enthält.

3.  Mischung nach den Ansprüchen 1 und 2, **dadurch gekennzeichnet**, daß die Komponente b) Methylester von gesättigten Fettsäuren mit 8 bis 10 Kohlenstoffatomen darstellt.

4.  Mischungen nach mindestens einem der Ansprüche 1 bis 3, **dadurch gekennzeichnet**, daß die Komponente c) Mischungen von polymeren Estern oder Copolymere von Estern der Acryl- und/oder Methacrylsäure mit Alkoholen mit 1 bis 22 Kohlenstoffatomen im Alkoholrest darstellt.

5.  Verfahren zur Herstellung von Mischungen von Fettsäureniedrigalkylestern mit verbesserter Kältestabilität, **dadurch gekennzeichnet**, daß man
    a) 58 bis 95 Gew.-% mindestens eines Esters im Iodzahlbereich 50 bis 150, der sich von Fettsäuren mit 12 bis 22 Kohlenstoffatomen und niederen aliphatischen Alkoholen mit 1 bis 4 Kohlenstoffatomen ableitet,
    b) 4 bis 40 Gew.-% mindestens eines Esters von Fettsäuren mit 6 bis 14 Kohlenstoffatomen und niederen aliphatischen Alkoholen mit 1 bis 4 Kohlenstoffatomen und
    c) 0,1 bis 2 Gew.-% mindestens eines polymeren Esters
    miteinander vermischt.

6.  Verfahren nach Anspruch 5, **dadurch gekennzeichnet**, daß man als Komponente a) technische Gemische einsetzt, die überwiegend Methylester von Fettsäuren mit 16 bis 22 Kohlenstoffatomen und 1, 2 oder 3 Doppelbindungen enthalten.

7.  Verfahren nach den Ansprüchen 5 und 6, **dadurch gekennzeichnet**, daß man als Komponente b) Methylester von gesättigten Fettsäuren mit 8 bis 10 Kohlenstoffatomen einsetzt.

8.  Verfahren nach mindestens einem der Ansprüche 5 bis 7, **dadurch gekennzeichnet**, daß man als Komponente c) Mischungen von polymeren Estern und/oder Copolymere von Estern der Acryl- und/oder Methacrylsäure mit Alkoholen mit 1 bis 22 Kohlenstoffatomen im Alkoholrest einsetzt.

9.  Verwendung von Mischungen von Fettsäureniedrigalkylestern mit verbesserter Kältestabilität nach den Ansprüchen 1 bis 4 als Kraftstoff für Dieselmotoren.

10. Verwendung von Mischungen von Fettsäureniedrigalkylestern mit verbesserter Kältestabilität erhältlich nach dem Verfahren nach den Ansprüchen 5 bis 8 als Kraftstoff für Dieselmotoren.

**Claims**

1.  Mixtures of fatty acid lower alkyl esters having improved low-temperature stability, **characterized in that** they contain
    a) 58 to 95% by weight of at least one ester with an iodine value of 50 to 150 derived from fatty acids containing 12 to 22 carbon atoms and lower aliphatic alcohols containing 1 to 4 carbon atoms,
    b) 4 to 40% by weight of at least one ester of fatty acids containing 6 to 14 carbon atoms and lower aliphatic alcohols containing 1 to 4 carbon atoms and
    c) 0.1 to 2% by weight of at least one polymeric ester.

2.  A mixture as claimed in claim 1, **characterized in that** component a) consists of technical mixtures predominantly containing methyl esters of fatty acids containing 16 to 22 carbon atoms and 1, 2 or 3 double bonds.

3.  A mixture as claimed in claims 1 and 2, **characterized in that** component b) consists of methyl esters of saturated fatty acids containing 8 to 10 carbon atoms.

4.  Mixtures as claimed in at least one of claims 1 to 3, **characterized in that** component c) consists of mixtures of polymeric esters or copolymers of esters of acrylic and/or methacrylic acid with alcohols containing 1 to 22 carbon atoms in the alcohol radical.

5. A process for the production of mixtures of fatty acid lower alkyl esters having improved low-temperature stability, **characterized in that**

a) 58 to 95% by weight of at least one ester with an iodine value of 50 to 150 derived from fatty acids containing 12 to 22 carbon atoms and lower aliphatic alcohols containing 1 to 4 carbon atoms,

b) 4 to 40% by weight of at least one ester of fatty acids containing 6 to 14 carbon atoms and lower aliphatic alcohols containing 1 to 4 carbon atoms and

c) 0.1 to 2% by weight of at least one polymeric ester,

are mixed together.

6. A process as claimed in claim 5, **characterized in that** technical mixtures predominantly containing methyl esters of fatty acids containing 16 to 22 carbon atoms and 1, 2 or 3 double bonds are used as component a).

7. A process as claimed in claims 5 and 6, **characterized in that** methyl esters of saturated fatty acids containing 8 to 10 carbon atoms are used as component b).

8. A process as claimed in at least one of claims 5 to 7, **characterized in that** mixtures of polymeric acids and/or copolymers of esters of acrylic and/or methacrylic acid with alcohols containing 1 to 22 carbon atoms in the alcohol radical are used as component c).

9. The use of the mixtures of fatty acid lower alkyl esters having improved low-temperature stability claimed in claims 1 to 4 as a fuel for diesel engines.

10. The use of mixtures of fatty acid lower alkyl esters having improved low-temperature stability obtainable by the process claimed in claims 5 to 8 as a fuel for diesel engines.

## Revendications

1. Mélanges d'esters alkyliques inférieurs d'acides gras à stabilité au froid améliorée, renfermant

a) 58 à 95 % en poids d'au moins un ester dont l'indice d'iode se situe dans l'intervalle de 50 à 150, qui dérive d'acides gras comportant 12 à 22 atomes de carbone et d'alcools aliphatiques inférieurs possédant 1 à 4 atomes ce carbone,

b) 4 à 40 % en poids d'au moins un ester d'acides gras comportant 6 à 14 atomes de carbone et d'alcools aliphatiques inférieurs possédant 1 à 4 atomes de carbone et

c) 0,1 à 2 % en poids d'au moins un ester polymère.

2. Mélange selon la revendication 1, **caractérisé en ce que** le composant a) représente des mélanges techniques, qui renferment en majeure partie, des esters méthyliques d'acides gras comportant 16 à 22 atomes de carbone et 1, 2 ou 3 doubles liaisons.

3. Mélange selon les revendications 1 et 2, **caractérisé en ce que** le composant b) représente des esters méthyliques d'acides gras saturés comportant 8 à 10 atomes de carbone.

4. Mélange selon au moins une des revendications 1 à 3, **caractérisé en ce que** le composant c) représente des mélanges d'esters polymères ou de copolymères d'esters de l'acide acrylique et/ou méthacrylique avec des alcools dont le radical alcool comporte 1 à 22 atomes de carbone.

5. Procédé pour la fabrication de mélanges d'esters alkyliques inférieurs d'acides gras à stabilité au froid améliorée, **caractérisé en ce que** l'on mélange ensemble

a) 58 à 95 % en poids d'au moins un ester dont l'indice d'iode se situe dans l'intervalle de 50 à 150, qui dérive d'acides gras comportant 12 à 22 atomes de carbone et d'alcools aliphatiques inférieurs possédant 1 à 4 atomes ce carbone,

b) 4 à 40 % en poids d'au moins un ester d'acides gras comportant 6 à 14 atomes de carbone et d'alcools aliphatiques inférieurs possédant 1 à 4 atomes de carbone et

c) 0,1 à 2 % en poids d'au moins un ester polymère.

6. Procédé selon la revendication 5, **caractérisé en ce que** l'on met en oeuvre comme composant a), des mélanges techniques, qui renferment en majeure partie des esters méthyliques d'acides gras comportant 16 à 22 atomes de carbone et 1, 2 ou 3 doubles liaisons.

7. Procédé selon les revendications 5 et 6, **caractérisé en ce que** l'on met en oeuvre comme composant b, des esters méthyliques d'acides gras saturés comportant 8 à 10 atomes de carbone.

8. Procédé selon au moins une des revendications 5 à 7, **caractérisé en ce que** l'on met en oeuvre comme composant c), des mélanges d'esters polymères et/ou des copolymères d'esters de l'acide acrylique et/ou méthacrylique avec des alcools dont le radical alcool comporte 1 à 22 atomes de carbone.

9. Utilisation de mélanges d'esters alkyliques inférieurs d'acides gras à stabilité au froid améliorée, selon les revendications 1 à 4, comme carburant pour les moteurs diesel.

10. Utilisation de mélanges d'esters alkyliques inférieurs d'acides gras à stabilité au froid améliorée, obtenables par le procédé selon les revendications 5 à 8, comme carburant pour les moteurs diesel.